# DEMANDE DE BREVET EUROPEEN

(11) **EP 2 541 864 A1**
(43) Date de publication de la demande: **02.01.2013**
(21) Numéro de dépôt: 12159216.6
(22) Date de dépôt: 13.03.2012
(51) Int. Cl.: H04L 29/06, H04L 12/58

(54) **Passerelle de communication entre caméras vidéo et sous-système multimédia**

(30) Priorité: 28.06.2011 FR 1155749
(71) Demandeur: Alcatel Lucent, 75007 Paris (FR)
(72) Inventeur: Outtagarts, Abdelkader, 91620 NOZAY (FR); Adzo, Kossi, 91620 NOZAY (FR)
(74) Mandataire: Mouney, Jérôme

(57) **Abrégé**

Passerelle de communication entre une caméra vidéo (C1, C2, C3) disposant d'une interface de courrier électronique et un sous-système multimédia (MS) mis en oeuvre sur un réseau de télécommunication, comportant des moyens de réception d'une notification émise par la caméra vidéo et de conversion du contenu de la notification en un message de signalisation transmis à un ensemble de clients (T1, T2, A) du sous-système multimédia s'étant enregistré à cette caméra vidéo.

## Description

La présente invention se rapporte au domaine technique des caméras vidéo et notamment des caméras vidéo de surveillance.

Les caméras vidéo possèdent typiquement des interfaces permettant un contrôle à distance. Ces interfaces peuvent être conformes à différents standards de télécommunication ; par exemple, SMTP/e-mail (Simple Mail Transfer Protocol), HTTP (HyperText Transfer Protocol), FTP (File Transfer Protocol), RTSP (Real-Time Streaming Protocol)...

Toutefois, ces interfaces sont insuffisantes pour permettre à une caméra d'interagir de façon optimale avec les réseaux de communication et de profiter de la richesse des services que ceux-ci permettent.

Plus précisément, les réseaux de communication récents permettent l'établissement et la gestion de sessions de communication par le protocole SIP (Session Initiation Protocol) tel que défini par le RFC 3261 de l'IETF (Internet Engineering Task Force).

Ils permettent en outre le déploiement de l'IMS (IP Multimedia Subsystem). L'IMS fait l'objet d'importants travaux de standardisation et offre une architecture permettant aux opérateurs de téléphonie d'offrir des services de télécommunication de façon indépendante de la technologie mise en oeuvre par les réseaux sous-jacents. Notamment, elle permet la convergence entre les réseaux de télécommunication fixe et les réseaux de télécommunication mobiles.

Or, très peu de caméras vidéo disposent d'une interface conforme au protocole SIP. Parmi les sociétés commercialisant ce type de caméras vidéo, on peut citer les sociétés Z3 technologies, Zyxel et GrandStream.

L'immense majorité de caméras vidéo ne possédant pas d'interface SIP ne peuvent pas se connecter aux architectures IMS.

En outre, un très grand nombre de caméras vidéo étant déjà déployés sur le terrain, il n'est pas réaliste de les remplacer par des caméras vidéo possédant une interface SIP.

Le but de la présente invention est de palier ces inconvénients en proposant un procédé de communication entre une caméra vidéo disposant d'une interface de courrier électronique et un sous-système multimédia mis en oeuvre sur un réseau de télécommunication. Ce procédé comporte :
- une étape de configuration de l'interface de courrier électronique de la caméra vidéo de sorte que les notifications émises par celle-ci soient transmises vers une adresse e-mail correspondant à une passerelle,
- une étape de réception par cette passerelle d'une notification émise par la caméra et de conversion du contenu de la notification en un message de signalisation transmis à un ensemble de clients du sous-système multimédia s'étant enregistré à cette caméra vidéo.

Selon des mises en oeuvre de l'invention, l'interface de courrier électronique est une interface SMTP.

Le procédé peut comprendre en outre
- une étape d'affectation d'une adresse publique à la caméra vidéo et
- une étape de réception par la passerelle d'un message de signalisation destiné à cette adresse publique, et de conversion en un message conforme à une interface de contrôle de la caméra vidéo avant transmission à celle-ci.

Il peut comporter de surcroit une étape de diffusion de cette adresse publique. Cette diffusion peut être effectuée par un serveur de présence.

Le procédé peut également comporter une étape d'enregistrement d'un client de ce sous-système multimédia par la passerelle auprès de la caméra.

La passerelle maintient une base de données associant des identifiants de caméras vidéo et des identifiants de clients enregistrés auprès de caméras vidéo.

Une session multimédia bidirectionnelle peut être établie entre la caméra vidéo et un client de l'ensemble de clients du sous-système multimédia s'étant enregistré à cette caméra vidéo.

L'invention a également pour objet une passerelle de communication entre une caméra vidéo disposant d'une interface de courrier électronique et un sous-système multimédia mis en oeuvre sur un réseau de télécommunication.

Cette passerelle comporte des moyens de réception d'une notification émise par la caméra et de conversion du contenu de cette notification en un message de signalisation transmis à un ensemble de clients du sous-système multimédia s'étant enregistrés à la caméra vidéo.

Selon des modes de réalisation de l'invention, la passerelle comporte une base de données associant la caméra vidéo avec des clients enregistrés à ladite caméra vidéo.

La passerelle peut également comporter des moyens pour recevoir un message de signalisation destiné à ladite caméra vidéo, pour le convertir en un message conforme à une interface de contrôle de ladite caméra vidéo et pour le transmettre à ladite caméra vidéo.

La passerelle peut en outre comporter des moyens de diffusion d'une adresse publique de la caméra vidéo.

Elle peut comporter des moyens d'enregistrement d'un client du sous-système multimédia auprès de la caméra.

Elle peut comporter une base de données associant des identifiants de caméras vidéo et des identifiants de clients enregistrés auprès de caméras vidéo.

L'invention a aussi pour objet un programme d'ordinateur comportant des moyens pour mettre en oeuvre le procédé selon l'invention précédemment décrit.

Les avantages et caractéristiques de l'invention apparaîtront de façon plus claire dans la description qui va suivre en liaison avec les figures annexées.
La figure 1 représente une architecture interconnectant un sous-système multimédia et un parc de caméra vidéo via une passerelle.
La figure 2 schématise une architecture fonctionnelle d'un sous-système multimédia.
La figure 3 illustre un exemple d'interface graphique permettant la configuration de l'interface SMTP d'une caméra vidéo.

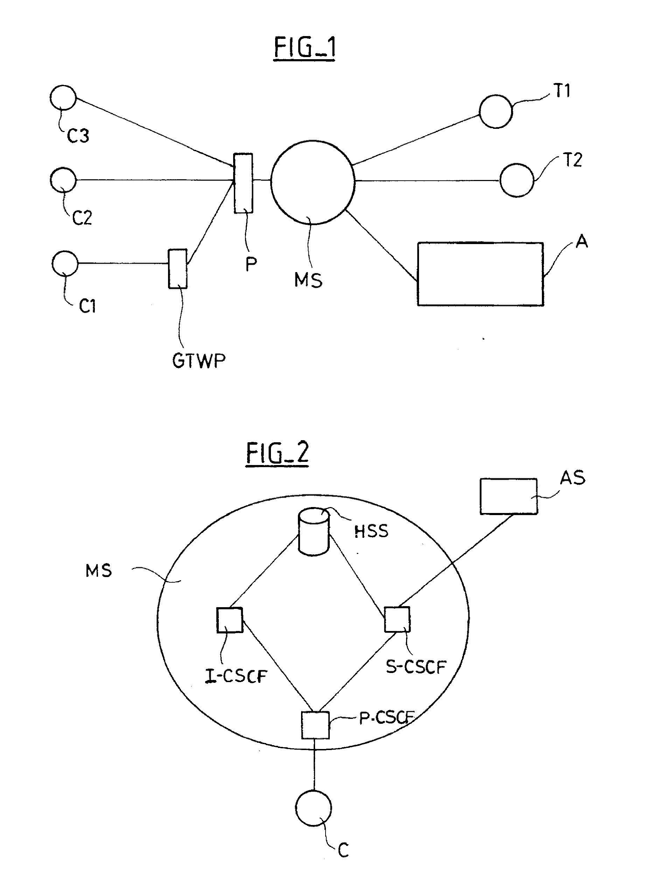

Dans l'exemple d'implémentation de la figure 1, la passerelle P connecte les caméras vidéos C1, C2, C3 à un sous-système multimédia MS.

Ce sous-système multimédia peut être conforme à la normalisation IMS (IP Multimédia Subsystem), tel que notamment définie par le 3GPP ou par le groupe TISPAN de l'ETSI (European Telecommunications Standards Institute).

Le sous-système multimédia peut plus précisément être le coeur d'un système IMS, ou « IMS Core » selon la terminologie en langue anglaise. Un tel coeur est schématisé sur la figure 2. Le sous-système multimédia MS comportant trois dispositifs fonctionnels principaux : P-CSCF, I-CSCF et S-CSCF (respectivement Proxy, Interface et Server-Call Session Control Function). Il peut en outre comprendre une base de données des profils d'utilisateurs HSS (Home Subscriber Server).

L'élément P-CSCF gère les connexions avec les clients de communication C directement raccordés à ce sous-système multimédia MS. L'élément I-CSCF permet de gérer les communications avec d'autres sous-systèmes multimédias. L'élément S-CSCF possède l'intelligence du système et assure les communications avec les serveurs applicatifs AS.

Sur la figure 1, ce coeur MS est connecté à un ensemble de serveurs d'applications A et à deux clients de communication T1, T2.

Les serveurs d'applications peuvent être des serveurs de présence, serveurs XDM (XML Document Manager), ou un serveur mettant en oeuvre n'importe quel application pouvant s'interfacer avec une architecture IMS. Il peut s'agir d'une application dédiée à la gestion de caméra vidéo, ou bien d'une application de gestion de capteurs en général. Par exemple, il peut s'agir d'un serveur d'application de référencement de capteur tel que décrit dans la demande de brevet européenne EP2224672.

La passerelle P peut enregistrer auprès du sous-système multimédia une ou plusieurs caméras dont elle a la charge.

Pour ce faire, elle peut construire une requête SIP « Register » et la transmettre au coeur MS.

Cette requête peut par exemple être de la forme suivante :
REGISTER sip:ime.home1 .com SIP/2 . 0
Via: SIP/2 . O/UDP scscfl.homel.com;branch= z9hG4bK-0--1 - 8321219513718260
Max-Forwards: 70
From: <sip:cameral@cameragateway.com>;tag=2-0--1-963621852
To: <sip:tv_publicAdrr@homel.com>
Contact: < sip: camera1@cameragateway.com >;expires=3600;user agent: Camera "vendor"
Call-ID: 03775315
CSeq: 70 REGISTER
Content-Length: 0

Ainsi, la passerelle P fait partie du sous-système multimédia et peut émettre et recevoir des messages de signalisation avec des clients de communication et des serveurs applicatifs connectés à ce sous-système, pour le compte de la caméra enregistrée.

Selon l'invention, il est prévu une étape de configuration de l'interface de courrier électronique des caméras vidéos C1, C2, C3 de sorte que les notifications qu'elles sont susceptibles d'émettre soient transmises vers une adresse e-mail correspondant à la passerelle P.

Les caméras vidéo et notamment de vidéosurveillance disposent typiquement d'une telle interface de courrier électronique afin de notifier le propriétaire de la caméra d'un événement (capture d'une vidéo suite à une détection de mouvement, etc.). Ces interfaces sont souvent conformes au protocole SMTP (Simple Mail Transfert Protocol), mais d'autres protocoles de courrier électronique peuvent également être utilisés.

Les caméras disposent d'une interface graphique permettant la configuration de l'interface de courrier électronique (ou « e-mail »), ainsi qu'illustré par la figure 3. Parmi les éléments susceptibles d'être configurés, on trouve habituellement une adresse e-mail émettrice et une adresse e-mail destinataire.

L'adresse e-mail émettrice correspondant à l'adresse de courrier électronique sous laquelle la caméra vidéo sera reconnue par le réseau de communication à laquelle elle est connectée. L'adresse e-mail destinataire correspond à l'adresse à laquelle les courriers électroniques seront transmis à travers ce réseau de communication. Également, il est habituellement requis d'indiquer l'adresse du serveur SMTP.

Cette adresse et l'adresse e-mail destinataire sont habituellement ceux correspondant au propriétaire de la caméra. Selon l'invention, ils correspondent à la passerelle P.

Dans l'exemple illustré par la figure 3, l'adresse du serveur SMTP correspondant à la passerelle P est cameragateway.com et l'adresse e-mail destinataire est admin@cameragateway.com.

Ainsi configurées, les notifications de la caméra vidéo C1, C2, C3 sont transmises par e-mail à la passerelle P.

Si une caméra C1 ne dispose pas d'interface de courrier électronique, il est possible de lui adjoindre un passerelle GTWP apte à assurer la communication entre l'interface spécifique de la caméra vidéo C1 et la passerelle P. Elle dispose pour ce faire d'une interface de courrier électronique du coté passerelle P.

La passerelle P recevant une telle notification peut extraire certaines informations telles que :
- l'e-mail, par exemple : camera1@cameranetwork.com
- L'adresse IP,
- Le type de camera, etc.

Elle peut également vérifier si le « login » et le mot de passe ont été correctement saisis par un administrateur.

Elle peut alors convertir le contenu de cet e-mail en un (ou plusieurs) message(s) de signalisation transmis à un ensemble de clients du sous-système multimédia MS ayant souscrit à la caméra vidéo.

Le contenu du message de signalisation peut être constitué du corps du courrier électronique reçu et de données extraites de l'entête du courrier électronique. Ainsi, les données correspondant au nom de la caméra vidéo, de la date d'émission, etc. peuvent être extraites et introduite dans des champs spécifiques du message de signalisation émis.

Ces clients peuvent êtres des terminaux de communication T1, T2 ou des applications A.

Les clients peuvent préalablement s'enregistrer auprès d'une caméra à travers la passerelle P. Par exemple, le terminal T1 peut s'enregistrer à la caméra C1; le terminal T2 peut s'enregistrer à la caméra C2 ; et une application A1 de l'ensemble applicatif A peut s'enregistrer auprès des caméras C2 et C3.

Pour ce faire, le client peut transmettre à la passerelle P un message de signalisation SIP « Invite », destiné à la caméra vidéo. Ce message de signalisation SIP peut avoir pour forme :
INVITE camera1@cameragateway.com SIP/2.0
Via: SIP/2.0/UDP pc33.atlanta.com;branch=z9hG4bK776asdhds
Max-Forwards: 70
To: camera 1 < camera1@cameragateway.com >
From: Alice <sip:alice@atlanta.com>;tag= 1928301774
Call-ID: a84b4c76e66710@pc33.atlanta.com
CSeq: 314159 INVITE
Contact: <sip:alice@pc33.atlanta.com>
Content-Type: application/sdp
Content-Length: 142

La passerelle P peut alors mettre en correspondance les caméras et les clients de communication et permettre la transmission de flux vidéo (« video streams ») de la caméra vers le client SIP.

Pour ce faire, la passerelle maintient une base de données mémorisant des associations entre des identifiants des caméras vidéos gérés C1, C2, C3 et des identifiants des clients enregistrés à ces caméras. Les identifiants peuvent être des noms logiques, des adresses physiques (adresses IP...), etc.

En reprenant les exemples d'enregistrement donnés ci-dessus, une telle base de données pourrait contenir les informations suivantes :

| Caméras | Clients |
|---|---|
| C1 | T1 |
| C2 | T2, A1 |
| C3 | A1 |

Ainsi, lors de la réception d'une notification provenant d'une caméra vidéo, la passerelle peut transmettre le contenu vers les clients enregistrés auprès de cette caméra.

Le contenu du courrier électronique reçu peut être converti en un ou plusieurs messages. Ces messages peuvent comprendre un message de signalisation conforme au protocole SIP tel que défini par le RFC 3261 de l'IETF Ce message de signalisation peut être un message de signalisation « Invite ». Ainsi, pour établir la signalisation SIP, un requête « Invite » peut être émise vers un client SIP, puis, une fois la session établie, la passerelle peut communication avec le client SIP par messages textes ou audio.

Afin de permettre aux clients de communication de s'enregistrer auprès d'une caméra (ou, par exemple, de la contrôler comme il sera vu plus bas), la passerelle P peut affecter une adresse publique à la caméra vidéo C1, C2, C3.

De cette façon, la caméra vidéo devient accessible par les clients du sous-système multimédia (terminaux et applications). Ils peuvent donc envoyer des messages de signalisation destinés à une caméra afin notamment de la contrôler ou d'obtenir des informations sur elle.

Il peut être prévu différentes façons de faire connaître l'adresse publique d'une caméra vidéo aux clients.

La diffusion peut par exemple être gérée par une application. Par exemple, une application de vidéosurveillance peut disposer de moyens de configurations propres pour établir les liens entre caméras de vidéosurveillance et clients de communication.

La diffusion peut également être prise en charge par les moyens inhérents à l'architecture IMS. Notamment, un serveur de présence peut être mis en oeuvre.

Après avoir enregistré la camera dans le réseau IMS, la passerelle P peut publier la présence de cette camera dans le serveur de présence, par un message de signalisation.

Ce message de signalisation peut être un message SIP « Publish » conforme au RFC 3903 de l'IETF intitulé « Session Initiation Protocol (SIP) Extension for Event »

Un tel message de signalisation peut avoir pour forme :
PUBLISH sip:presentity@presenceserver.com SIP/2.0
Via: SIP/2.0/UDP
   139.54.130.72:5061;branch=z9hG4bKsipp54145247610sipp
Max-Forwards: 70
From: presentity <sip: cameral@cameragateway.com >;tag=1
To: presentity <sip:presentity@ presenceserver.com >
Call-ID: 1-21284@139.54.130.72
Cseq: 1 PUBLISH
Subject: 01_01 Basic Publish
Event: presence
Expires: 600
Content-Type: application/pidf+xml
Content-Length: 1 162
<?xml version="1.0" encoding="UTF-8"?>
<pr:presence xmlns:pr="urn:ietf:params:xml:ns:pidf"
xmlns:r="urn:ietf:params:xml:ns:pidf:rpid"
xmlns:pdm="urn:ietf:params:xml:ns:pidf:data-model"
xmlns:c="urn:ietf:params:xml:ns:pidf:caps"
entity="sip:presentity@ presenceserver.com">
<pr:tuple id="t11">
< pr: status >
<pr:basic>open</pr:basic>
</pr:status>
< pdm:deviceID> mac:8asd7d7d70</pdm:deviceID>
<c:servcaps>
<c:methods>
<c:method>MESSAGE</c:method>
<c:method>OPTIONS</c:method>
</c:methods>
</c:servcaps>
<pr:contact>sip:presentity@ presenceserver.com </pr:contact>
</pr:tuple>
<pr:tuple id="t12">
<pr:status>
<pr:basic>open</pr:basic>
</pr:status>
<pdm:deviceID>mac:8as222222</pdm:deviceID>
<c:servcaps>
<c:methods>
<c:method>MESSAGE</c:method>
<c:method>OPTIONS</c:method>
</c:methods>
</c:servcaps>
<pr:contact>sip:presentity@presenceserver.com</pr:contact>
</pr:tuple>
<pdm:person id="first">
< pr:status>
< r:activities>
< r:on-the-phone/>
<r:busy/>
</r:activities>
</pr:status>
< r:sphere> maison</r:sphere>
</pdm:person>
<pdm:device id="mac8asd7d7d70">
< r:user-input>idle</r:user-input><pdm:deviceID>mac8970</pdm:deviceID>
</pdm:device>
</pr:presence>

L'utilisation d'un serveur de présence permet de publier en temps-réel le statut de la caméra vidéo et notamment sa disponibilité.

En effet, une caméra peut ne supporter qu'un nombre limité de connexion et peut publier un statut « non disponible » si ce nombre est atteint.

En outre, une caméra peut être commandée à distance par un client de communication. Auquel cas, un seul client à la fois peut avoir accès à cette fonctionnalité de commande.

Également, il peut être prévu qu'un client disposant de droits d'accès particuliers puisse à un moment donné bloquer l'accès d'autres clients à cette caméra. Un statut « non disponible » pourra alors être publié.

Il peut également être prévu que la caméra s'enregistre auprès de la passerelle P. Une fois la configuration effectuée comme décrit précédemment, la caméra vidéo transmet un message d'enregistrement à la passerelle P afin de l'informer de sa présence et de ses caractéristiques.

Ses caractéristiques peuvent comprendre son nom (un identifiant sous lequel elle demande à être connu des clients de l'IMS), des informations techniques (résolution vidéo, formats et CODEC supportés, localisation géographique, etc.)

Ces caractéristiques peuvent être mémorisées dans la passerelle P.

La passerelle peut également mémoriser le statut de la caméra vidéo, c'est-à-dire notamment sa disponibilité.

En reprenant l'exemple utilisé ci-dessus, une telle mémoire peut être :

| Caméras | caractéristiques | Statut | Clients |
|---|---|---|---|
| C1 | .... | Dispo/Non dispo | T1 |
| C2 | .... | Dispo/Non dispo | T2, A1 |
| C3 | .... | Dispo/Non dispo | A1 |

La passerelle peut utiliser ces caractéristiques pour répondre à un client du sous-système multimédia MS qui souhaite obtenir des informations sur une caméra donnée, sans avoir à l'interroger.

La passerelle P peut également proposer un service de recherche de caméras. Ce service peut être implémenté directement sur la passerelle P ou bien dans un serveur applicatif A. Dans ce dernier cas, les requêtes de recherche peuvent être adressées directement au serveur applicatif ou bien à la passerelle qui peut les transmettre au serveur applicatif de façon transparent pour le client émettant la requête.

Une telle requête peut porter sur des caractéristiques techniques et/ou sur une localisation géographie. Il peut s'agir d'obtenir par exemple la liste des caméras vidéo supportant un format donné (par exemple un format supporté par le client lui-même).

Un client (terminal de communication ou application) peut également contrôler une caméra vidéo.

Il transmet un message de signalisation à la passerelle P destinée à une adresse publique de la caméra vidéo. Ce message de signalisation est un message SIP.

La passerelle P recevant ce message peut le convertir en un message conforme à une interface de contrôle de la caméra vidéo en question, et le lui transmettre.

Ce contrôle peut consister à différentes actions qui peuvent influencer directement ou indirectement le comportement de la caméra vidéo. Ces actions peuvent comprendre :
- déplacer l'angle de visé de la caméra ;
- changer la focalisation de la caméra, la valeur de zoom de la caméra, ou tout autre valeur du capteur optique et du traitement numérique de l'image capturé ;
- allumer, éteindre la caméra ;
- modifier les paramètres de notification de la caméra
- changer les modes de fonctionnement de la caméra (détection de mouvement, etc.)

Ces actions peuvent correspondre à différentes catégories de clients. Une gestion des droits d'accès au niveau du sous-système multimédia MS permet de distinguer entre ces catégories. Ainsi, une première catégorie peut consister en des clients ayant un accès normal qui peuvent réaliser les 2 premiers types d'actions de la liste ci-dessus, alors que les autres types d'actions ne sont accessibles qu'à une deuxième catégorie d'utilisateurs ayant des droits d'administrateur.

Dans la mesure où la caméra vidéo a enregistré la passerelle P comme entité administratrice, elle ne peut accepter de requête de contrôle provenant d'autres éléments, et notamment provenant directement des clients (applications ou terminaux de communication). Aussi, l'invention permet une sécurisation des transmissions des informations vidéo : il n'est pas possible de contourner la sécurité inhérente à l'IMS et à la passerelle P pour contrôler une caméra vidéo. Seuls les clients du sous-système multimédias MS peuvent contrôler une caméra dans les conditions définis préalablement (droits du client ; ouverture du contrôle d'une caméra...).

L'invention permet donc de résoudre également la problématique de sécurité et d'accès aux informations personnelles (ici vidéo) avec les problèmes légaux de droit à l'image.

En outre, les droits d'accès étant gérés par le sous-système multimédia, son respect et son contrôle sont sous la responsabilité de l'opérateur de télécommunication. Le contrat liant l'utilisateur et l'opérateur permet de garantir la confiance de l'utilisateur en la bonne gestion de l'information personnelle qui lui sont confiés (y compris vidéos).

Si une caméra vidéo dispose de moyens de production sonore, l'invention permet de l'utiliser comme terminal de communication. En effet, celle-ci étant connectée au sous-système multimédia MS via la passerelle P, il devient possible de faire transiter des sessions multimédias bidirectionnelles entre elle et un terminal de communication (par exemple, ou bien une autre caméra vidéo). L'invention permet donc d'accroître le parc des moyens de communication disponible.

Dans le cas où la caméra est une caméra de vidéosurveillance sur un site, elle peut alors servir d'interphone avec le personnel en charge de la sécurité du site : un événement (mouvement d'une personne...) peut déclencher une notification vers le poste de sécurité. Le personnel peut alors émettre un message audio vers la caméra à l'origine de la notification pour demander à la personne de s'identifier ou d'expliquer la situation.

N'importe que terminal peut alors être utilisé par le personnel de sécurité et notamment un terminal mobile de communication qu'il peut emporter dans sa ronde.

Comme dit précédemment, les applications peuvent recevoir des notifications des caméras vidéo au même titre que les terminaux de communication.

Différents types d'applications peuvent être prévus.

Une application possible consiste à recevoir des notifications et des informations vidéo provenant de plusieurs caméras vidéo afin de les agréger.

Dans l'exemple d'un parc de caméra de surveillances associées à un site industriel, une personne qui s'introduirait de nuit sur le site serait susceptible de déclencher la détection de mouvement de plusieurs caméras de surveillance. Afin d'éviter que le personnel de sécurité ne reçoive sur son terminal de surveillance un trop grand nombre de notification, l'invention peut prévoir une application vers laquelle les notifications sont envoyées.

L'application a pour tâche de détecter que les notifications sont relatives à un seul événement (sur la base d'une concomitance des dates et des localisations géographiques), et de transmettre une notification agrégée vers le terminal de surveillance.

Les notifications transmises par les caméras de surveillance peuvent comprendre des photos correspondant à l'événement déclenchant la notification. Dans ce cas, l'application peut comporter une analyse des photographies reçus afin de déterminer celles qui contiennent un visage et peut alors ne transmettre au terminal de surveillance que les photos contenant un visage (à l'exclusion de celles où la personne détectée est de dos, de profil, masqué etc.)

Une telle application peut en outre agir sur les caméras vidéo afin d'optimiser automatiquement la collecte d'informations utiles.

## Revendications

1. Procédé de communication entre une caméra vidéo (C1, C2, C3) disposant d'une interface de courrier électronique et un sous-système multimédia (MS) mis en oeuvre sur un réseau de télécommunication, comportant
- une étape de configuration de l'interface de courrier électronique de ladite caméra de sorte que les notifications émises par ladite caméra soient transmises vers une adresse e-mail correspondant à une passerelle (P),
- une étape de réception par ladite passerelle d'une notification émise par ladite caméra et de conversion du contenu de ladite notification en un message de signalisation transmis à un ensemble de clients (T1, T2, A) dudit sous-système multimédia s'étant enregistré à ladite caméra vidéo.

2. Procédé selon la revendication précédente dans lequel ladite interface de courrier électronique est une interface SMTP.

3. Procédé selon l'une des revendications 1 ou 2, comprenant en outre une étape d'affectation d'une adresse publique à ladite caméra vidéo et une étape de réception par ladite passerelle d'un message de signalisation destiné à ladite adresse publique, et de conversion en un message conforme à une interface de contrôle de ladite caméra vidéo avant transmission à ladite caméra vidéo.

4. Procédé selon la revendication précédente comportant une étape de diffusion de ladite adresse publique.

5. Procédé selon la revendication précédente dans lequel ladite diffusion est effectuée par un serveur de présence.

6. Procédé selon l'une des revendications précédentes, comportant en outre une étape d'enregistrement d'un client dudit sous-système multimédia par ladite passerelle auprès de ladite caméra.

7. Procédé selon la revendication précédente dans lequel ladite passerelle maintient une base de données associant des identifiants de caméras vidéos et des identifiants de clients enregistrés auprès de caméras vidéos.

8. Procédé selon l'une des revendications précédentes dans lequel une session multimédia bidirectionnelle est établie entre ladite caméra vidéo et un client dudit ensemble.

9. Passerelle de communication entre une caméra vidéo (C1, C2, C3) disposant d'une interface de courrier électronique et un sous-système multimédia (MS) mis en oeuvre sur un réseau de télécommunication, comportant des moyens de réception d'une notification émise par ladite caméra et de conversion du contenu de ladite notification en un message de signalisation transmis à un ensemble de clients (T1, T2, A) dudit sous-système multimédia s'étant enregistré à ladite caméra vidéo.

10. Passerelle selon la revendication précédente comportant une base de données associant ladite caméra vidéo avec des clients enregistrés à ladite caméra vidéo.

11. Passerelle selon l'une des revendications 9 et 10 comportant des moyens pour recevoir un message de signalisation destiné à ladite caméra vidéo, pour le convertir en un message conforme à une interface de contrôle de ladite caméra vidéo et pour le transmettre à ladite caméra vidéo.

12. Passerelle selon l'une des revendications 9 à 11 comportant des moyens de diffusion d'un adresse publique de ladite caméra vidéo.

13. Passerelle selon l'une des revendications 9 à 12 comportant des moyens d'enregistrement d'un client dudit sous-système multimédia auprès de ladite caméra.

14. Passerelle selon la revendication précédente comportant en outre une base de données associant des identifiants de caméras vidéos et des identifiants de clients enregistrés auprès de caméras vidéos.

15. Programme d'ordinateur comportant des moyens pour mettre en oeuvre un procédé selon l'une des revendications 1 à 8.
